# EUROPÄISCHE PATENTSCHRIFT

(11) **EP 4 427 595 B1**
(45) Veröffentlichungstag und Bekanntmachung des Hinweises auf die Patenterteilung: **24.09.2025**
(21) Anmeldenummer: 24159695.6
(22) Anmeldetag: 26.02.2024
(51) Int. Cl.: A21C 9/00

(54) **TEIGVERARBEITUNGSANLAGE MIT PRODUKTPROGRAMMWEITERLEITUNG**
DOUGH PROCESSING SYSTEM WITH PRODUCT PROGRAM FORWARDING
INSTALLATION DE TRAITEMENT DE PÂTE AVEC TRANSFERT DE PROGRAMME DE PRODUIT

(30) Priorität: 07.03.2023 DE 102023105536
(43) Veröffentlichungstag der Anmeldung: 11.09.2024
(73) Patentinhaber: Fritsch Bakery Technologies GmbH & Co. KG, 97348 Markt Einersheim (DE)
(72) Erfinder: Stegmaier, Wolfgang, 97337 Dettelbach (DE); Gebhardt, Samuel, 97318 Kitzingen (DE)
(74) Vertreter: Grünecker Patent- und Rechtsanwälte PartG mbB

(56) Entgegenhaltungen:
- DE-A1- 102020 126 779
- US-A- 3 566 805
- US-A- 5 611 420

## Beschreibung

Die vorliegende Erfindung bezieht sich auf eine Teigverarbeitungsanlage gemäß Anspruch 1 sowie auf ein Verfahren zum automatischen Durchführen eines Programmwechsels an einer Teigverarbeitungsanlage gemäß Anspruch 5.

Es sind Teigverarbeitungsanlagen bzw. Industrielinien bekannt, die zum Herstellen von Backwaren in industriellen Stückzahlen konfiguriert sind. Solche Industrielinien weisen in Produktionsrichtung hintereinander mehrere Bearbeitungssektionen auf, um aus einem Teigmaterial fertige Teiglinge herzustellen.

In US3566805 wird eine Anlage gemäß dem Oberbegriff des Anspruchs 1 und ein Verfahren gemäß dem Oberbegriff des Anspruchs 5 offenbart.

Insbesondere können solche Industrielinien zur Herstellung unterschiedlicher Produktformate konfiguriert sein. Bei einem Wechsel von einem Produktformat auf ein anderes Produktformat werden die jeweiligen in der Industrielinie eingesetzten Bearbeitungssektionen herkömmlicherweise von Sektion zu Sektion manuell vom Bedienpersonal auf das neue Produktformat eingestellt. Dabei werden für jede Bearbeitungssektion neue Betriebsparameter eingegeben. Die Steuerung wird somit mit neuen Prozessparametern belegt. Diese Prozessparameter lassen sich für jede Bearbeitungssektion manuell anhand eines Eingabemoduls der Steuereinrichtung eingeben.

Ein solcher, an jeder der Bearbeitungssektionen durchgeführter Programmwechsel beanspruchtjedoch viel Zeit, wodurch der Programmwechsel insgesamt für die gesamte Industrielinie bisher sehr aufwendig ist und zu erhöhten Stillstandzeiten der Industrielinie führt. Hinzu kommt, dass für das Einstellen der jeweiligen Bearbeitungssektionen besonders dafür geschulte Fachkräfte gebraucht werden.

Vor diesem Hintergrund liegt der Erfindung die Aufgabe zugrunde, eine Teigverarbeitungsanlage bzw. -linie sowie ein dementsprechendes Verfahren zur Verfügung zu stellen, wodurch sich ein Programmwechsel einfacher durchführen lässt.

Diese Aufgabe wird gelöst mittels einer Teigverarbeitungsanlage gemäß Anspruch 1 sowie anhand eines Verfahrens gemäß Anspruch 5.

Vorteilhafte Weiterbildungen der Erfindung sind anhand der jeweiligen Gegenstände der Unteransprüche gegeben.

Die vorliegende Erfindung betrifft eine Teigverarbeitungsanlage mit mehreren in Produktionsrichtung hintereinander angeordneten Bearbeitungssektionen, die zum Ausführen verschiedener Produktprogramme zur Herstellung unterschiedlicher Produktformate konfiguriert sind, wobei die Teigverarbeitungsanlage eine mit den jeweiligen Bearbeitungssektionen verbundene Steuereinrichtung zum Aktivieren der jeweiligen Produktprogramme an den Bearbeitungssektionen umfasst. Anhand dieser Steuereinrichtung ist an den jeweiligen Bearbeitungssektionen ein Programmwechsel von einem jeweils daran eingestellten, ersten Produktprogramm auf mindestens ein neues, zweites Produktprogramm aktivierbar.

Erfindungsgemäß ist vorgesehen, dass durch ein Aktivieren des Programmwechsels an der in Produktionsrichtung an erster Stelle angeordneten Bearbeitungssektion die Steuereinrichtung dazu konfiguriert ist, in aufeinander folgenden Schritten automatisch an derjenigen Bearbeitungssektion der in Produktionsrichtung folgenden Bearbeitungssektionen den Programmwechsel zu einem Zeitpunkt durchzuführen, zu welchem innerhalb dieser Bearbeitungssektion die Bearbeitung eines zuletzt gemäß dem ersten Produktprogramm bearbeiteten Produktformats als abgeschlossen gilt. Dies ist dann der Fall, wenn das Ende des zuletzt gemäß dem ersten Produktprogramm bearbeiteten Produktformats diese Bearbeitungssektion verlassen hat bzw. in der in Produktionsrichtung anschließenden Bearbeitungssektion angekommen ist.

Ein solcher automatisiert und schrittweise an den der ersten Bearbeitungssektion folgenden Bearbeitungssektionen angesteuerter Programmwechsel kann das Bedienpersonal erheblich darin unterstützen, die Teigverarbeitungsanlage insgesamt auf ein neues Produktprogramm einzustellen. Dadurch, dass bei der Erfindung in Produktionsrichtung von Bearbeitungsstation zu Bearbeitungsstation das neu aktivierte Produktprogramm weitergeleitet wird, kommt es wenn überhaupt aufgrund von Werkzeugwechsel lediglich zu geringen Stillstandzeiten der Industrielinie.

Bei der erfindungsgemäßen Teigverarbeitungsanlage kann es sich insbesondere um eine Industrielinie handeln, deren Bearbeitungssektionen zur industriellen Brotherstellung, zur industriellen Gebäckherstellung oder zur industriellen Pizza- und Flachbrotherstellung konfiguriert sind. Diese Industrielinien können bei der Herstellung dieser Produkttypen auf unterschiedliche Produktformate eingestellt werden.

Bei der erfindungsgemäßen, automatisierten Programmwechselfunktion dient das Aktivieren des Programmwechsels an der in Produktionsrichtung an erster Stelle angeordneten Bearbeitungssektion als Trigger für die Steuereinrichtung, damit diese dazu veranlasst ist, in aufeinander folgenden Schritten die weiteren in Produktionsrichtung nachgeordneten Bearbeitungssektionen nacheinander an das gewünschte neue, zweite Produktprogramm angepasst einzustellen, insbesondere mittels diesbezüglicher Prozessparameter die jeweiligen Bearbeitungssektionen neu zu belegen, damit in den Bearbeitungssektionen eingesetzte Werkzeuge demensprechend angesteuert werden können, sodass sich die Industrielinie insgesamt schrittweise automatisch auf das neue Produktprogramm umstellt.

Somit wird das Bedienpersonal, wenn überhaupt nur noch zum Aktvieren des Programmwechsels an der in Produktionsrichtung an erster Stelle positionierten Bearbeitungssektion benötigt, während weitere Schritte zur Durchführung des Programmwechsels entlang der gesamten Teigverarbeitungsanlage automatisiert durchgeführt werden können. Bei der Erfindung dient somit das Aktvieren des neuen Produktprogramms bzw. das Durchführen des Programmwechsels an der in Produktionsrichtung an erster Stelle positionierten Bearbeitungssektion dazu, die Steuereinrichtung in einen Wechselmodus zu schalten, in welchem sie die folgenden Bearbeitungssektionen schrittweise nacheinander automatisch auf das neue Produktprogramm einstellt.

Vorzugsweise ist die Steuereinrichtung dazu konfiguriert, auf Basis von Messwerten mindestens eines den jeweiligen Bearbeitungssektionen zugeordneten Anfahrschaltungssensors zum Erfassen eines Anfangs und/oder eines Endes des in die Bearbeitungssektionen hineinfahrenden Produktformats und auf Basis einer für dieses Produktformat an den Bearbeitungssektionen eingestellten Bandgeschwindigkeit zu bestimmen, an welche Stelle sich der Anfang und/oder das Ende des Produktformats innerhalb der jeweiligen Bearbeitungssektionen befindet. Anhand der Anfahrschaltungssensoren und mittels der Bandgeschwindigkeiten kann die Steuereinrichtung eine Teigverfolgung durchführen, um präzise die Stelle zu ermitteln, an welcher sich der Anfang und/oder das Ende des Produktformats innerhalb der jeweiligen Bearbeitungssektion befindet.

Gemäß einer Variante der Erfindung ist die Steuereinheit dazu konfiguriert, die jeweiligen Zeitpunkte zu bestimmen, zu welchem der Anfang eines zuerst gemäß dem zweiten Produktprogramm bearbeiteten Produktformats entlang der Produktionsrichtung jeweilige Ausgänge der hintereinander angeordneten Bearbeitungssektionen erreicht, wobei die Steuereinrichtung zu diesen Zeitpunkten dazu veranlasst ist, an der dem jeweiligen Ausgang anschließenden Bearbeitungssektionen den Programmwechsel automatisch durchzuführen, wenn an dieser die Bearbeitung eines dem zuerst gemäß dem zweiten Produktprogramm bearbeiteten Produktformats vorausgehenden, zuletzt gemäß dem ersten Produktprogramm bearbeiteten Produktformats als abgeschlossen gilt, oder den automatischen Programmwechsel an dieser Bearbeitungsstation so lange zu verzögern, bis an dieser die vorangehend genannte Bedingung erfüllt ist. Erreicht demnach der Teiganfang des neuen Produktformats die nächste Bearbeitungssektion wird anhand der Steuereinrichtung geprüft, ob das Teigende vom vorherigen Produktprogramm diese Bearbeitungssektion bereits verlassen hat. Dies lässt sich beispielsweise mittels des Anfahrschaltungssensors der weiter stromabwärts positionierten Bearbeitungssektion ermitteln. Demzufolge kann zum Ermitteln der Position des Teigendes des vorausgehenden Produktformats dieselbe Mess- und Auswertungstechnik eingesetzt werden als zum Ermitteln der Position des Teiganfangs des anschließenden, neuen Produktformats.

Denkbar wäre es, dass die Steuereinrichtung dazu konfiguriert ist, die jeweiligen Zeitpunkte zu bestimmen, zu welchen das Ende eines zuletzt gemäß dem ersten Produktprogramm bearbeiteten Produktprogramms entlang der Produktionsrichtung jeweilige Eingänge der hintereinander angeordneten Bearbeitungssektionen erreicht, wobei die Steuereinrichtung zu diesen Zeitpunkten dazu veranlasst ist, an der dem jeweiligen Eingang vorausgehenden Bearbeitungssektionen den Programmwechsel automatisch durchzuführen, wenn am Ausgang einer dieser Bearbeitungssektionen vorangehenden Bearbeitungssektion das zuerst gemäß dem zweiten Produktprogramm bearbeitete Produktformat vorliegt, oder den automatischen Programmwechsel so lange zu verzögern, bis an dieser vorausgehenden Bearbeitungssektion die vorangehend genannte Bedingung erfüllt ist. Ist dies der Fall, wird auch in dieser Bearbeitungssektion das neue, zweite Produktprogramm automatisch mittels der Steuereinrichtung aktiviert, d.h. in dieser geladen, wodurch für diese Bearbeitungssektion zum Ausführen des neuen Produktprogramms jeweilige Prozessparameter automatisch in der Steuereinrichtung hinterlegt werden können, um das neue Produktprogramm quasi von selbst automatisch an dieser Bearbeitungssektion in Gang zu setzen.

Die Bearbeitungssektionen bilden insbesondere Förderbandabschnitte aus, die sich unabhängig voneinander ansteuern lassen, allerdings auch für einen gekoppelten Betrieb geeignet sind. Damit lassen sich Verzögerungen des Programmwechsels bezüglich der verspäteten Ankunft des Anfangs des neuen Produktformats am Ausgang der Bearbeitungssektionen bzw. bezüglich der verspäteten Ankunft des Endes des dem neuen vorausgehenden Produktformats am Eingang der Bearbeitungssektionen kompensieren, selbst wenn die verschiedenen Produktformate mit unterschiedlichen Bandgeschwindigkeiten entlang der Teigverarbeitungsanlage gefördert werden.

Ferner bezieht sich die Erfindung auf ein Verfahren zum Durchführen eines Programmwechsels an einer Teigverarbeitungsanlage, wobei eine Steuereinrichtung an einer mit ihr verbundenen, in Produktionsrichtung an erster Stelle gelagerten, ersten Bearbeitungssektion der Teigverarbeitungsanlage ein Programmwechsel von einem daran eingestellten, ersten Produktprogramm auf ein neues, zweites Produktprogramm, aktiviert. Erfindungsgemäß wird durch das Aktivieren des Programmwechsels an der in Produktionsrichtung an erster Stelle angeordneten Bearbeitungssektion die Steuereinrichtung dazu veranlasst, in aufeinander folgenden Schritten automatisch an derjenigen Bearbeitungssektion der in Produktionsrichtung folgenden Bearbeitungssektionen den Programmwechsel zu einem Zeitpunkt durchzuführen, zu welchem innerhalb dieser Bearbeitungssektion die Bearbeitung des vorausgehenden, zuletzt gemäß dem ersten Produktprogramm bearbeiteten Produktformats als abgeschlossen gilt. Folglich kann durch das Aktivieren des Programmwechsels an der in Produktionsrichtung an erster Stelle angeordneten Bearbeitungssektion die Steuereinrichtung in einen automatisierten Wechselmodus geschalten werden, mittels welchem sie schrittweise eine Produktprogrammanpassung an den nachfolgenden Bearbeitungssektionen ausführt, ohne dass dafür weitere Eingaben an der Steuereinrichtung durch das Bedienpersonal benötigt werden.

Die der ersten Bearbeitungssektion folgenden Bearbeitungssektionen werden damit automatisch nacheinander auf das neue Produktprogramm eingestellt, d.h. mit dementsprechenden Prozessparametern belegt, um den daran ablaufenden Betrieb gemäß dem voreingestellten, ersten Produktprogramm auf das neue, zweite Produktprogramm zu wechseln.

Vorzugsweise bestimmt die Steuereinrichtung auf Basis von Messwerten mindestens eines den jeweiligen Bearbeitungssektionen angeordneten Anfahrschaltungssensors zum Erfassen eines Anfangs und/oder eines Endes des in die Bearbeitungssektionen hineinfahrenden Produktformats und auf Basis einer für dieses Produktformat an den Bearbeitungssektionen eingestellten Bandgeschwindigkeit, an welcher Stelle sich der Anfang und/oder das Ende des Produktformats innerhalb der jeweiligen Bearbeitungssektionen befindet. Die diesbezüglich eingesetzte Messtechnik lässt sich damit zur Teigverfolgung des Anfangs und des Endes eines Produktformats einsetzen.

Eine Variante sieht vor, dass die Steuereinrichtung die jeweiligen Zeitpunkte bestimmt, zu welchen der Anfang eines zuerst gemäß dem zweiten Produktprogramm bearbeiteten Produktformats entlang der Produktionsrichtung jeweilige Ausgänge der hintereinander angeordneten Bearbeitungssektionen erreicht, wobei die Steuereinrichtung zu diesen Zeitpunkten veranlasst wird, an der dem jeweiligen Ausgang anschließenden Bearbeitungssektion den Programmwechsel automatisch durchzuführen, wenn an dieser die Bearbeitung eines dem zuerst gemäß dem zweiten Produktprogramm bearbeiteten Produktformats vorausgehenden, zuletzt gemäß dem ersten Produktprogramm bearbeiteten Produktformats als abgeschlossen gilt, oder den automatischen Programmwechsel an dieser Bearbeitungssektion solange zu verzögern, bis an dieser die vorangehend genannte Bedingung erfüllt ist. Sofern das Ende bereits aus der Bearbeitungssektion heraus ist, d.h. den Eingang der nachfolgenden Bearbeitungssektion erreicht hat, kann der automatische Programmwechsel stattfinden. Ansonsten wird dieser solange verzögert, bis das Ende des zuletzt gemäß dem ersten Produktprogramm erzeugten Produktformats am Eingang der nachfolgenden Bearbeitungssektion angekommen ist.

Eine Ausführungsform der Erfindung sieht vor, dass die Steuereinrichtung die jeweiligen Zeitpunkte bestimmt, zu welchen das Ende eines zuletzt gemäß dem ersten Produktprogramm bearbeiteten Produktformats entlang der Produktionsrichtung jeweilige Eingänge der hintereinander bearbeiteten Arbeitssektionen erreicht, wobei die Steuereinrichtung zu diesen Zeitpunkten dazu veranlasst wird, an der dem jeweiligen Eingang vorausgehenden Bearbeitungssektionen den Programmwechsel automatisch durchzuführen, wenn am Ausgang einer dieser Bearbeitungssektion vorangehenden Bearbeitungssektion der Anfang des zuerst gemäß dem zweiten Produktprogramm bearbeiteten Produktformats vorliegt, oder den automatischen Programmwechsel solange zu verzögern, bis an dieser vorausgehenden Bearbeitungssektion die vorangehend genannte Bedingung erfüllt ist. Damit werden die Programmwechsel an den jeweiligen Bearbeitungsstationen zum Zeitpunkt, wenn der Teiganfang des neuen Produktformats an deren Eingang angekommen ist, d.h. just in time, durchgeführt.

Die Bearbeitungssektionen bilden insbesondere hintereinander positionierte Förderbandabschnitte aus, die unabhängig voneinander angesteuert werden, allerdings auch zumindest während des Programmwechselmodus untereinander gemeinsam antrieben werden können. Damit lassen sich Verzögerungen des Programmwechsels bezüglich der verspäteten Ankunft des Anfangs des neuen Produktformats am Ausgang der Bearbeitungssektionen bzw. bezüglich der verspäteten Ankunft des Endes des dem neuen vorausgehenden Produktformats am Eingang der Bearbeitungssektionen kompensieren, selbst wenn die verschiedenen Produktformate mit unterschiedlichen Bandgeschwindigkeiten entlang der Teigverarbeitungsanlage gefördert werden.

Ausführungsbeispiele der Erfindung werden anhand der folgenden Zeichnungen genauer erläutert. Es zeigen:
- Fig. 1: eine schematische Darstellung einer Teigverarbeitungsanlage mit drei Bearbeitungssektionen,
- Fig. 2a: ein schematisch dargestellter, zeitverzögerter Programmwechsel an einer Teigverarbeitungsanlage gemäß Figur 1,
- Fig. 2b: ein weiterer schematisch dargestellter, zeitverzögerter Programmwechsel an einer Teigverarbeitungsanlage gemäß Figur 1,
- Fig. 3a bis 3e: eine schematische Darstellung einer Teigverarbeitungsanlage als Industrielinie mit mehreren Bearbeitungssektionen sowie daran schrittweise nacheinander stattfindende Programmwechsel, sowie
- Fig. 4: eine schematisch dargestellte Teigverarbeitungsanlage in Form einer Industrielinie.

Gleiche technische Merkmale sind in den Figuren durchgehend mit denselben Bezugszeichen versehen.

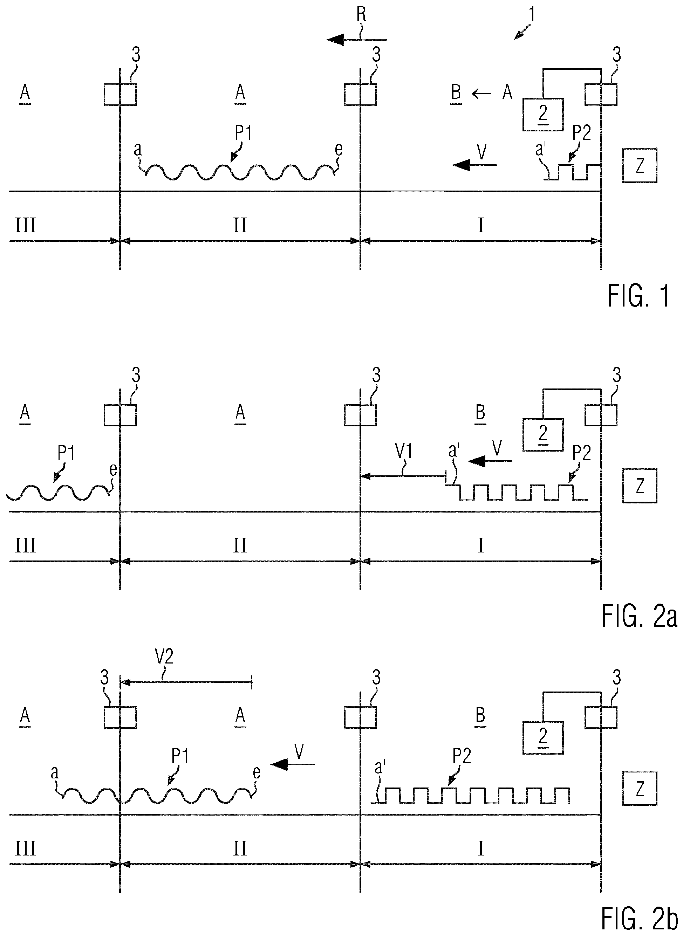

Figur 1 zeigt in schematischer Darstellung eine Teigverarbeitungsanlage 1, die als Industrielinie konfiguriert ist. Die Teigverarbeitungsanlage 1 verfügt über eine in Produktionsrichtung R an erster Stelle positionierte, erste Bearbeitungssektion I. Der ersten Bearbeitungssektion I folgt eine zweite Bearbeitungssektion II in Produktionsrichtung R. Weiter stromabwärts, d.h. hinter der zweiten Bearbeitungssektion II, ist eine dritte Bearbeitungssektion III schematisch dargestellt.

Die Teigverarbeitungsanlage 1 aus Figur 1 weist ferner eine Steuereinrichtung 2 auf, die die Aufgabe hat, die jeweiligen Prozesse an den Bearbeitungssektionen I - III zu steuern und zu überwachen. Mit der Steuereinrichtung 2 sind an den jeweiligen Eingängen der Bearbeitungssektionen I - III positionierte Anfahrschaltungssensoren 3 verbunden, anhand welcher ein Anfang a sowie ein Ende e eines Produktformats P1, welches mittels eines ersten Produktprogramms A hergestellt wird, erfassbar sind. Insbesondere können die jeweiligen Anfahrschaltungssensoren 3 den Anfang a des Produktformats P1 dadurch erfassen, dass er am Ausgang einer Bearbeitungssektion I - III ankommt bzw. das Ende e des Produktformats P1 dadurch erfassen, des es am Eingang einer der Bearbeitungssektionen I - III ankommt.

Gemäß Figur 1 sind die zweite und die dritte Bearbeitungssektion II, III noch auf das erste Produktprogramm A eingerichtet. Dies bedeutet, dass die Steuereinrichtung 2 diese Bearbeitungssektionen II, III gemäß daran für das erste Produktprogramm A eingestellten Prozessparametern steuert.

Weiter zeigt Figur 1, dass die an erster Stelle positionierte, erste Bearbeitungssektion I von dem ersten Produktprogramm A auf ein neues, zweites Produktprogramm B umgestellt ist, um ein neues Produktformat P2 herzustellen. Dafür wählt das Bedienpersonal der Teigverarbeitungsanlage 1 an der Steuereinrichtung 2 in einer darin zur Verfügung gestellten Produktprogrammverwaltung das darin hinterlegte neue Produktprogramm P2 aus, welches dann an der ersten Bearbeitungssektion I aktiviert wird, wenn das Ende e des zuletzt mittels des ersten Produktprogramms A erzeugten Produktformats P1 den Eingang der nächsten, zweiten Bearbeitungssektion II erreicht hat. Die Steuereinrichtung 2 ist dadurch in einen Programmwechselmodus gestellt, der eine automatisierte Programmwechselfunktion für die in Produktionsrichtung R nachfolgenden Bearbeitungssektionen II, III bereitstellt.

Figur 2a zeigt, dass das Ende des zuletzt mittels des ersten Produktprogramms A erzeugten Produktformats P1 am Eingang der dritten Bearbeitungssektion III angekommen ist. Zu diesem Zeitpunkt hat jedoch ein Anfang a' des mittels des neu ausgewählten Produktprogramms B erzeugten Produktformats P2 noch nicht den Ausgang der ersten Bearbeitungssektion I erreicht. Auf Basis der mittels des Anfahrschaltungssensors 3 am Eingang der ersten Bearbeitungssektion I erfassten Messwerte und auf Basis der in der ersten Bearbeitungssektion I eingestellten Bandgeschwindigkeit v für das neue Produktprogramm B kann die Steuereinrichtung jedoch vorhersagen bzw. ermitteln, zu welchem Zeitpunkt der Anfang a' des neuen Produktformats P2 am Ausgang der ersten Bearbeitungssektion I ankommen wird. Bis dies geschieht, wird der automatische Programmwechsel an der nachfolgenden, zweiten Bearbeitungssektion II verzögert, was schematisch durch die Verzögerung V1 dargestellt ist.

Gemäß der in Figur 2a schematisch dargestellten Funktionsweise wird daher der an der zweiten Bearbeitungssektion II durch die Steuereinrichtung 2 durchgeführte Programmwechsel vom ersten Produktprogramm A auf das neue Produktprogramm B solange verzögert, bis einerseits das Ende des ersten Produktformats P1 am Eingang der dritten Bearbeitungssektion III vorliegt und der Anfang a' des neuen Produktformats P2 am Ausgang der ersten Bearbeitungssektion I angekommen ist. Bis die letztgenannte Bedingung eintrifft, kann das vorausgehende Produktformat P1 ohne Unterbrechung weitertransportiert werden, ggf. sogar mit einer anderen Geschwindigkeit als das neue Produktformat P2.

Figur 2b zeigt das durch den Programmwechsel an der ersten Bearbeitungssektion I vom Produktprogramm A auf das neue Produktprogramm B der Anfang a' des neuen Produktprogramms P2 bereits den Ausgang der ersten Bearbeitungssektion I erreicht hat, ehe das Ende des vorausgehenden, zuletzt mittels des ersten Produktprogramms A erzeugten Produktformats P1 die zweite Bearbeitungssektion I verlassen hat. Die Steuereinrichtung 2 kann diese Situation anhand der Anfahrschaltungssensoren 3 sowie der jeweiligen Bandgeschwindigkeiten v erfassen und solange den Programmwechsel an der zweiten Bearbeitungssektion II herauszögern, bis das Ende e des Produktprogramms P1 am Eingang der dritten Bearbeitungssektion III angekommen ist, sprich die zweite Bearbeitungssektion II verlassen hat. Dafür stoppt ein Förderbandabschnitt der ersten Bearbeitungssektion I, während Förderbandabschnitte der beiden folgenden Bearbeitungssektionen II, III weiterlaufen, um das Produktformat P1 aus der zweiten Bearbeitungssektion II herauszutransportieren, damit daran der automatisierte Programmwechsel auf das neue Produktformat P2 durchgeführt werden kann.

Gemäß Figur 2b wird daher der Programmwechsel innerhalb der zweiten Bearbeitungssektion II durch das noch darin erfassbare Ende e des zuletzt mittels des ersten Produktprogramms A hergestellten Produktformats P1 verzögert. Diese Verzögerung wird schematisch durch das Bezugszeichen V2 angezeigt.

Die Figuren 2a und 2b zeigen schematisch, dass die Steuereinrichtung 2 der Teigverarbeitungsanlage 1 mittels Teigverfolgung sowohl das Ende e des Produktformats P1 als auch den Anfang a' des Produktformats P2 positionsmäßig erfasst, sodass diesbezüglich der in der zweiten Bearbeitungssektion II automatisiert durchgeführte Programmwechsel vom ersten Produktprogramm A auf das neue Produktprogramm B stets dann stattfindet, wenn das Ende des Produktformats P1 bereits in der dritten Bearbeitungssektion III ist und der Anfang des neuen Produktformats P2 vor dem Eingang der zweiten Bearbeitungssektion II angekommen ist.

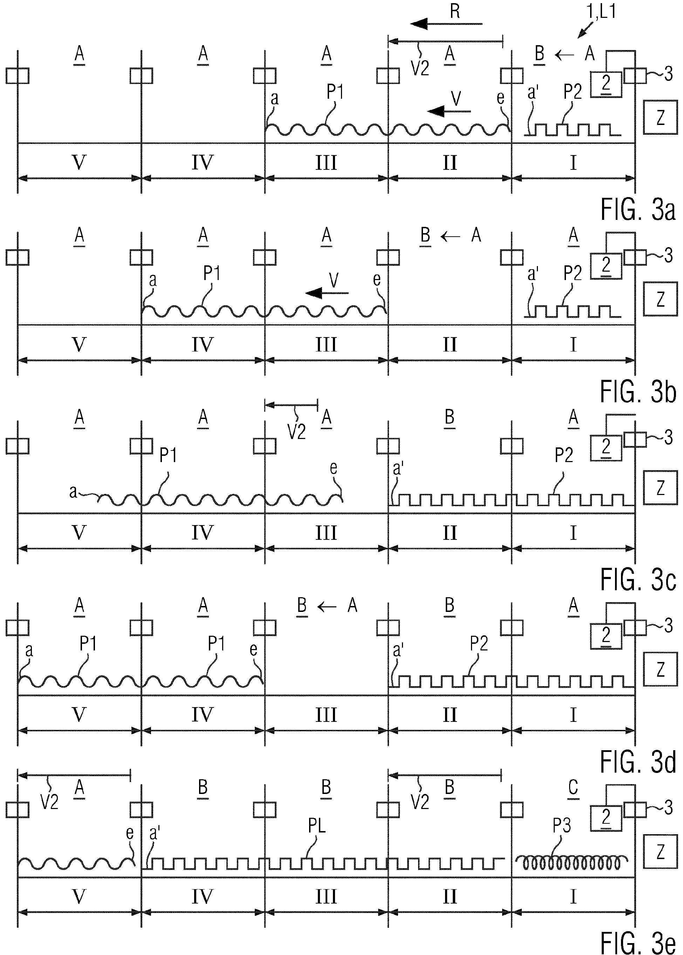

Die Figuren 3a bis 3e zeigen die Teigverarbeitungsanlage 1 als Industrielinie L1 mit fünf schematisch dargestellten Bearbeitungssektionen I bis V, die durch Förderbandabschnitte 4-8 verbunden sind. An der ersten Bearbeitungsstation I hat bereits ein Programmwechsel von einem Produktprogramm A auf ein neues Produktprogramm B stattgefunden. Durch diesen aktivierten Programmwechsel mittels der Steuereinrichtung 2 ist diese nun veranlasst die nachfolgenden Bearbeitungssektionen II bis V schrittweise nacheinander vom Produktprogramm A auf das neue Produktprogramm B umzustellen. Diese automatische Abfolge der Programmwechsel an den Bearbeitungssektionen II bis V wird durch die Figuren 3b bis 3e schematisch dargestellt.

Gemäß Figur 3a ist der Anfang a' des neuen Produktformats P2 bereits am Ausgang der ersten Bearbeitungssektion I angekommen. Das Ende e des vorausgehenden, zuletzt mittels des ersten Produktprogramms A hergestellten Produktformats P1 hat jedoch noch nicht die anschließende zweite Bearbeitungssektion II verlassen. Für den automatisiert durchgeführten Programmwechsel an der zweiten Bearbeitungssektion II wartet die Steuereinrichtung 2 nun solange, bis das Ende e des Produktformats P1 am Eingang der dritten Bearbeitungssektion III angekommen ist. Zwischen dem Produktformat P1 und dem neuen Produktformat P2 wird damit eine Lücke geschaffen, d.h. die zweite Bearbeitungssektion II wird leergefahren. Dies wird schematisch anhand Figur 3b gezeigt. Gemäß Figur 3b kann dann auch die zweite Bearbeitungssektion II auf das neue Produktprogramm B automatisch durch die Steuereinrichtung 2 eingestellt werden.

Gemäß Figur 3c ist der Anfang a' des neuen Produktformats P2 am Ausgang der zweiten Bearbeitungssektion II angekommen, während das Ende e des vorausgehenden Produktformats P1 noch nicht die dritte Bearbeitungssektion III verlassen hat. Dies bedeutet, dass die Zuführung des neuen Produktformats P2 stoppt und zwar solange bis das Ende des vorausgehenden Produktformats P1 in der vierten Bearbeitungssektion IV angekommen ist, sprich dort am Eingang vorliegt. Dieser Zustand wird schematisch in Figur 3d gezeigt, sodass nun auch die dritte Bearbeitungssektion III, da sie leergefahren ist, vom ursprünglichen Produktprogramm A auf das neue Produktprogramm B wechseln kann. Dies wird erneut automatisch durch die Steuereinrichtung 2 durchgeführt, sodass nun auch an der dritten Bearbeitungssektion III vorzugsweise sämtliche Prozessparameter zum Durchführen des neuen Produktprogramms B aktiviert sind.

Somit lassen sich die hintereinander angeordneten Bearbeitungssektionen II bis V automatisch mittels der Steuereinrichtung 2 Schritt für Schritt auf das neue Produktprogramm B einstellen, ohne dass dabei das Bedienpersonal Einstellungen für die jeweiligen Bearbeitungssektionen II bis V an der Steuereinrichtung 2 durchführen braucht.

Gemäß den Figuren 3a bis 3e weist das Förderband mehrere hintereinander angeordnete Förderbandabschnitte auf, die anhand der Steuereinrichtung 2 für einen im Hinblick auf die jeweiligen Verzögerungen V2 unabhängigen, je nachdem auch gekoppelten Betrieb ansteuerbar sind. Bspw. würden im Hinblick auf Figur 3a die Förderbandabschnitte der Bearbeitungssektionen II bis V gemeinsam mit der Geschwindigkeit v angetrieben werden, um das Ende e des Produktformats P1 aus der zweiten Bearbeitungssektion II herauszubefördern, damit darin der Programmwechsel vom Produktprogramm A auf das Produktprogramm B stattfinden kann. Während die jeweiligen Förderbandabschnitte der jeweiligen Bearbeitungssektionen II bis V gemeinsam angetrieben werden, bleibt der Förderbandabschnitt der an erster Stelle positionierten, ersten Bearbeitungssektion I stehen. Damit ergibt sich die in Figur 3b gezeigte Situation, in welcher die zweite Bearbeitungssektion II komplett frei wird, womit sich daran der automatisierte Programmwechsel vom Produktprogramm A auf das Produktprogramm B automatisch angesteuert wird.

Gemäß Figur 3c bleiben die jeweiligen Förderbandabschnitte der beiden Bearbeitungssektionen I und II stehen, während die dahinter angeordneten Förderbandabschnitte der Bearbeitungssektion III bis V gemeinsam angetrieben werden, um das Ende e des Produktformats P1 aus der dritten Bearbeitungssektion III herauszufördern. Diese Situation ist in Figur 3d gezeigt, gemäß welcher nun die dritte Bearbeitungssektion III leergefahren ist und somit auf das neue Produktprogramm B eingestellt werden kann.

In Figur 3e bleiben die Förderbandabschnitte der Bearbeitungssektion I bis IV stehen, damit der Förderbandabschnitt der fünften Bearbeitungssektion V das Ende e des Produktformats P1 weiter transportieren kann, und an der fünften Bearbeitungssektion V der Programmwechsel auf das Produktprogramm B stattfindet, wenn der darin vorgesehene Förderbandabschnitt leergefahren ist. Danach verfahren die Förderbandabschnitteweiter, der Förderbandabschnitt I bleibt stehen bis der Förderbandabschnitt II leergefahren ist. Ist dies erreicht wird die zweite Bearbeitungssektion II vom Produktformat P2 auf ein neues Produktformat P3 umgestellt usw.

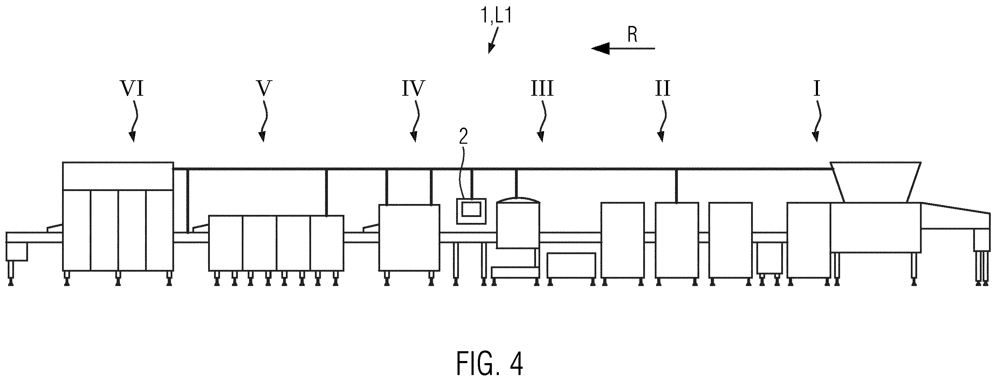

Figur 4 zeigt eine Teigverarbeitungsanlage 1, die in Form einer Industrielinie L1 konfiguriert ist und mehrere in Produktionsrichtung R hintereinander angeordnete Bearbeitungssektionen I bis VI zur industriellen Brotherstellung aufweist. Die in Produktionsrichtung R an erster Stelle positionierte, erste Bearbeitungssektion I ist als Teigbandformer konfiguriert. Darin werden portionsweise zugeführte Teiglagen zu einem Teigband geformt. Dies geschieht mittels in der zweiten Bearbeitungssektion II drehbar gelagerten Satellitenköpfen, anhand denen sich der Teig zu einem flachen Teigband auswälzen lassen. In der in Produktionsrichtung R dahinter positionierten dritten Bearbeitungssektion III wird das Teigband in Spuren geschnitten. Dies können beispielsweise drei parallel zueinander verlaufende Teigspuren sein, die als nächstes in der vierten Bearbeitungssektion IV, in gewünschte Abstände zueinander gebracht werden.

Die anschließende fünfte Bearbeitungssektion V ist als Stanzeinrichtung konfiguriert, um aus den zugeführten Teigspuren hintereinander Brotportionen auszustanzen. Weiter stromabwärts in Produktionsrichtung R ist eine sechste Bearbeitungssektion VI positioniert, die beispielsweise ein Rundwirkwerkzeug aufweist, um quadratisch zugeschnittene Brotportionen in eine runde Brotform zu bringen.

Die in Figur 4 gezeigte Teigverarbeitungsanlage 1 verfügt ferner über eine Steuereinrichtung 2, die mit den jeweiligen Bearbeitungssektionen I bis VI funktional verbunden ist. Ein daran aktivierter Programmwechsel führt dazu, dass die Teiglagenzuführung gestoppt wird und abgewartet wird, bis aus der ersten Bearbeitungssektion I das Ende eines darin bisher hergestellten Produktformats diese Bearbeitungssektion I verlassen hat. Ist dies der Fall, wird die erste Bearbeitungssektion I auf das neue in der Steuereinrichtung 2 aktivierte Produktprogramm gewechselt. Dadurch wird eine Automatisierungsfunktion, d.h. ein automatischer Wechselmodus in der Steuereinrichtung 2 in Gang gesetzt, der dazu führt, dass die jeweiligen anschließenden Bearbeitungssektionen II bis VI schrittweise nacheinander auf das neue Produktprogramm eingestellt werden. Dies geschieht immer dann, wenn das Ende des vorangehenden, zuletzt mittels des vorherigen Produktprogramms erzeugten Produktformats die jeweiligen Bearbeitungssektionen II bis VI verlassen hat und am Eingang dieser Bearbeitungssektionen II bis VI der Anfang des neuen Produktformats angekommen ist.

## Patentansprüche

1. Teigverarbeitungsanlage (1) mit mehreren in Produktionsrichtung (R) hintereinander angeordneten Bearbeitungssektionen (I - VI), die zum Ausführen verschiedener Produktprogramme (A, B) zur Herstellung unterschiedlicher Produktformate (P1, P2) konfiguriert sind, wobei die Teigverarbeitungsanlage (1) eine mit den jeweiligen Bearbeitungssektionen (I - VI) verbundene Steuereinrichtung (2) zum Aktivieren der jeweiligen Produktprogramme (P1, P2) an den Bearbeitungssektionen (I - VI) umfasst, und wobei anhand der Steuereinrichtung (2) an den jeweiligen Bearbeitungssektionen (I - VI) ein Programmwechsel von einem jeweils daran eingestellten, ersten Produktprogramm (A) auf mindestens ein neues, zweites Produktprogramm (B) aktivierbar ist, **dadurch gekennzeichnet, dass** durch ein Aktivieren des Programmwechsels an der in Produktionsrichtung (R) an erster Stelle angeordneten Bearbeitungssektion (I) die Steuereinrichtung (2) dazu konfiguriert ist, in aufeinander folgenden Schritten automatisch an derjenigen Bearbeitungssektion (II - VI) der in Produktionsrichtung (R) folgenden Bearbeitungssektionen (II - VI) den Programmwechsel zu einem Zeitpunkt durchzuführen, zu welchem innerhalb dieser Bearbeitungssektion (II - VI) die Bearbeitung eines zuletzt gemäß dem ersten Produktprogramm (A) bearbeiteten Produktformats (P1) als abgeschlossen gilt.

2. Teigverarbeitungsanlage nach Anspruch 1, **dadurch gekennzeichnet, dass** die Steuereinrichtung (2) dazu konfiguriert ist, auf Basis von Messwerten mindestens eines den jeweiligen Bearbeitungssektionen (I - VI) zugeordneten Anfahrschaltungssensors (3) zum Erfassen eines Anfangs (a) und/oder eines Endes (e) des in die Bearbeitungssektionen (I - VI) hineinfahrenden Produktformats (P1, P2) und auf Basis einer für dieses Produktformat (P1, P2) an den Bearbeitungssektionen (I - VI) eingestellten Bandgeschwindigkeit (v) zu bestimmen, an welcher Stelle sich der Anfang (a) und/oder das Ende (e) des Produktformats (P1, P2) innerhalb der jeweiligen Bearbeitungssektionen (I - VI) befindet.

3. Teigverarbeitungsanlage nach Anspruch 2, **dadurch gekennzeichnet, dass** die Steuereinrichtung (2) dazu konfiguriert ist, die jeweiligen Zeitpunkte zu bestimmen, zu welchen der Anfang (a) eines zuerst gemäß dem zweiten Produktprogramm (B) bearbeiteten Produktformats (P2) entlang der Produktionsrichtung (R) jeweilige Ausgänge der hintereinander angeordneten Bearbeitungssektionen (I - VI) erreicht, wobei die Steuereinrichtung (2) zu diesen Zeitpunkten dazu veranlasst ist, an der dem jeweiligen Ausgang anschließenden Bearbeitungssektion (II - VI) den Programmwechsel automatisch durchzuführen, wenn an dieser die Bearbeitung eines dem zuerst gemäß dem zweiten Produktprogramm (B) bearbeiteten Produktformats (P2) vorausgehenden, zuletzt gemäß dem ersten Produktprogramm (A) bearbeiteten Produktformats (P1) als abgeschlossen gilt, oder den automatischen Programmwechsel an dieser Bearbeitungssektion (II - VI) solange zu verzögern, bis an dieser die vorangehend genannte Bedingung erfüllt ist.

4. Teigverarbeitungsanlage nach Anspruch 2 oder 3, **dadurch gekennzeichnet, dass** die Steuereinrichtung (2) dazu konfiguriert ist, die jeweiligen Zeitpunkte zu bestimmen, zu welchen das Ende (e) eines zuletzt gemäß dem ersten Produktprogramm (A) bearbeiteten Produktformats (P1) entlang der Produktionsrichtung (R) jeweilige Eingänge der hintereinander angeordneten Bearbeitungssektionen (II - VI) erreicht, wobei die Steuereinrichtung (2) zu diesen Zeitpunkten dazu veranlasst ist, an der dem jeweiligen Eingang vorausgehenden Bearbeitungssektion (II - VI) den Programmwechsel automatisch durchzuführen, wenn am Ausgang einer dieser Bearbeitungssektion (II - VI) vorangehenden Bearbeitungssektion (I - VI) das zuerst gemäß dem zweiten Produktprogramm (B) bearbeitete Produktformat (P2) vorliegt, oder den automatischen Programmwechsel solange zu verzögern, bis an dieser vorausgehenden Bearbeitungssektion (I - VI) die vorangehend genannte Bedingung erfüllt ist.

5. Verfahren zum automatischen Durchführen eines Programmwechsels an einer Teigverarbeitungsanlage (1), wobei eine Steuereinrichtung (2) an einer mit ihr verbundenen, in Produktionsrichtung (R) an erster Stelle gelagerten, ersten Bearbeitungssektion (I) der Teigverarbeitungsanlage (1) einen Programmwechsel von einem daran eingestellten, ersten Produktprogramm (A) auf ein neues, zweites Produktprogramm (B) aktiviert, **dadurch gekennzeichnet, dass** durch das Aktivieren des Programmwechsels an der in Produktionsrichtung (R) an erster Stelle angeordneten Bearbeitungssektion (I) die Steuereinrichtung (2) dazu veranlasst wird, in aufeinander folgenden Schritten automatisch an derjenigen Bearbeitungssektion (II - VI) der in Produktionsrichtung (R) folgenden Bearbeitungssektionen (II - VI) den Programmwechsel zu einem Zeitpunkt durchzuführen, zu welchem innerhalb dieser Bearbeitungssektion (II - VI) die Bearbeitung eines vorausgehenden, zuletzt gemäß dem ersten Produktprogramm (A) bearbeiteten Produktformats (P1) als abgeschlossen gilt.

6. Verfahren nach Anspruch 5, **dadurch gekennzeichnet, dass** die Steuereinrichtung (2) auf Basis von Messwerten mindestens eines den jeweiligen Bearbeitungssektionen (I - VI) zugeordneten Anfahrschaltungssensors (3) zum Erfassen eines Anfangs (a, a') und/oder eines Endes (e, e') des in die Bearbeitungssektionen (I - VI) hineinfahrenden Produktformats (P1, P2) und auf Basis einer für dieses Produktformat (P1, P2) an den Bearbeitungssektionen (I - VI) eingestellten Bandgeschwindigkeit (v) bestimmt, an welcher Stelle sich der Anfang (a, a') und/oder das Ende (e, e') des Produktformats (P1, P2) innerhalb der jeweiligen Bearbeitungssektionen (I - VI) befindet.

7. Verfahren nach Anspruch 5 oder 6, **dadurch gekennzeichnet, dass** die Steuereinrichtung (2) die jeweiligen Zeitpunkte bestimmt, zu welchen der Anfang eines zuerst gemäß dem zweiten Produktprogramm (B) bearbeiteten Produktformats (P2) entlang der Produktionsrichtung (R) jeweilige Ausgänge der hintereinander angeordneten Bearbeitungssektionen (I - VI) erreicht, wobei die Steuereinrichtung (2) zu diesen Zeitpunkten dazu veranlasst wird, an der dem jeweiligen Ausgang anschließenden Bearbeitungssektion (II - VI) den Programmwechsel automatisch durchzuführen, wenn an dieser die Bearbeitung eines dem zuerst gemäß dem zweiten Produktprogramm (B) bearbeiteten Produktformats (P2) vorausgehenden, zuletzt gemäß dem ersten Produktprogramm (A) bearbeiteten Produktformats (P1) als abgeschlossen gilt, oder den automatischen Programmwechsel an dieser Bearbeitungssektion (II - VI) solange zu verzögern, bis an dieser die vorangehend genannte Bedingung erfüllt wird.

8. Verfahren nach Anspruch 6 oder 7, **dadurch gekennzeichnet, dass** die Steuereinrichtung (2) die jeweiligen Zeitpunkte bestimmt, zu welchen das Ende (e) eines zuletzt gemäß dem ersten Produktprogramm (A) bearbeiteten Produktformats (P1) entlang der Produktionsrichtung (R) jeweilige Eingänge der hintereinander angeordneten Bearbeitungssektionen (I - VI) erreicht, wobei die Steuereinrichtung (2) zu diesen Zeitpunkten dazu veranlasst wird, an der dem jeweiligen Eingang vorausgehenden Bearbeitungssektion (II - VI) den Programmwechsel automatisch durchzuführen, wenn am Ausgang einer dieser Bearbeitungssektion (II - VI) vorangehenden Bearbeitungssektion (I) der Anfang des zuerst gemäß dem zweiten Produktprogramm (B) bearbeitete Produktformat (P2) vorliegt, oder den automatischen Programmwechsel solange zu verzögern, bis an dieser vorausgehenden Bearbeitungssektion (I) die vorangehend genannte Bedingung erfüllt ist.

## Claims

1. Dough processing system (1) with a plurality of processing sections (I - VI) arranged one behind the other in the production direction (R), which are configured to execute different product programs (A, B) for producing different product formats (P1, P2), wherein the dough processing system (1) comprises a control device (2) connected to the respective processing sections (I - VI) for activating the respective product programs (P1, P2) at the processing sections (I - VI), and wherein a program change from a first product program (A) respectively set thereon to at least one new, second product program (B) can be activated at the respective processing sections (I - VI) by means of the control device (2), **characterized in that,** by activating the program change at the processing section (I) arranged in first place in the production direction (R), the control device (2) is configured to automatically carry out the program change in successive steps at that processing section (II - VI) of the processing sections (II - VI) following in the production direction (R) at a time at which, within this processing section (II - VI), the processing of a product format (P1) last processed in accordance with the first product program (A) is deemed to be completed.

2. Dough processing system according to claim 1, **characterized in that** the control device (2) is configured to determine, on the basis of measured values of at least one approach circuit sensor (3) assigned to the respective processing sections (I - VI) for detecting a beginning (a) and/or an end (e) of the product format (P1, P2) moving into the processing sections (I - VI) and on the basis of a belt speed (v) set for this product format (P1, P2) at the processing sections (I - VI), at which point the beginning (a) and/or the end (e) of the product format (P1, P2) is located within the respective processing sections (I - VI).

3. Dough processing system according to claim 2, **characterized in that** the control device (2) is configured to determine the respective times at which the beginning (a) of a product format (P2) first processed according to the second product program (B) along the production direction (R) reaches respective outputs of the processing sections (I - VI) arranged one behind the other, wherein the control device (2) is prompted at these times to automatically carry out the program change at the processing section (II - VI) following the respective output if the processing of a product format (P2) preceding the product format (P1) first processed in accordance with the second product program (B) and last processed in accordance with the first product program (A) is deemed to be completed at this processing section, or to delay the automatic program change at this processing section (II - VI) until the aforementioned condition is fulfilled at this processing section.

4. Dough processing system according to claim 2 or 3, **characterized in that** the control device (2) is configured to determine the respective times at which the end (e) of a product format (P1) last processed according to the first product program (A) along the production direction (R) reaches respective inputs of the processing sections (II - VI) arranged one behind the other, wherein the control device (2) is prompted at these times to carry out the program change automatically at the processing section (II - VI) preceding the respective input if the product format (P2) processed first in accordance with the second product program (B) is present at the output of one of the processing sections (I - VI) preceding this processing section (II - VI), or to delay the automatic program change until the aforementioned condition is fulfilled at this preceding processing section (I - VI).

5. Method for automatically carrying out a program change on a dough processing system (1), wherein a control device (2) activates a program change from a first product program (A) set thereon to a new, second product program (B) on a first processing section (I) of the dough processing system (1) connected thereto and mounted in first place in the production direction (R), **characterized in that** by activating the program change at the processing section (I) arranged in first place in the production direction (R), the control device (2) is prompted to automatically carry out the program change in successive steps at that processing section (II - VI) of the processing sections (II - VI) following in the production direction (R) at a time at which, within this processing section (II - VI), the processing of a preceding product format (P1) last processed in accordance with the first product program (A) is deemed to have been completed.

6. Method according to claim 5, **characterized in that** the control device (2) determines on the basis of measured values of at least one approach circuit sensor (3) assigned to the respective processing sections (I - VI) for detecting a beginning (a, a') and/or an end (e, e') of the product format (P1, P2) and, on the basis of a belt speed (v) set for this product format (P1, P2) at the processing sections (I - VI), determines the position at which the beginning (a, a') and/or the end (e, e') of the product format (P1, P2) is located within the respective processing sections (I - VI).

7. Method according to claim 5 or 6, **characterized in that** the control device (2) determines the respective times at which the beginning of a product format (P2) first processed according to the second product program (B) along the production direction (R) reaches respective outputs of the processing sections (I - VI) arranged one behind the other, wherein the control device (2) is prompted at these times to automatically carry out the program change at the processing section (II - VI) following the respective output if the processing of a product format (P2) preceding the product format (P1) first processed in accordance with the second product program (B) and last processed in accordance with the first product program (A) is deemed to have been completed at this processing section, or to delay the automatic program change at this processing section (II - VI) until the aforementioned condition is fulfilled at this processing section.

8. Method according to claim 6 or 7, **characterized in that** the control device (2) determines the respective times at which the end (e) of a product format (P1) last processed according to the first product program (A) along the production direction (R) reaches respective inputs of the processing sections (I - VI) arranged one behind the other, wherein the control device (2) is prompted at these times to automatically carry out the program change at the processing section (II - VI) preceding the respective input if the beginning of the product format (P2) first processed in accordance with the second product program (B) is present at the output of a processing section (I) preceding this processing section (II - VI), or to delay the automatic program change until the aforementioned condition is fulfilled at this preceding processing section (I).

## Revendications

1. Installation de traitement de pâte (1) ayant plusieurs sections de traitement (I - VI) disposées les unes derrière les autres dans le sens de production (R), qui sont configurées pour exécuter différents programmes de produits (A, B) pour la fabrication de différents formats de produits (P1, P2), l'installation de traitement de pâte (1) comprenant un dispositif de commande (2) relié aux sections de traitement respectives (I - VI) pour activer les programmes de produits respectifs (P1, P2) sur les sections de traitement (I - VI), et un changement de programme étant effectué à l'aide du dispositif de commande (2) sur les sections de traitement respectives (I - VI) d'un premier programme de produits (A) réglé sur celles-ci à au moins un nouveau programme de produits (B), **caractérisé en ce que,** par une activation du changement de programme sur la section de traitement (I) disposée en première position dans le sens de production (R), le dispositif de commande (2) est configuré pour effectuer automatiquement, par étapes successives, le changement de programme sur la section de traitement (II - VI) des sections de traitement (II - VI) suivantes dans le sens de production (R) à un moment auquel, à l'intérieur de cette section de traitement (II - VI), le traitement d'un format de produit (P1) traité en dernier lieu selon le premier programme de produit (A) est considéré comme terminé.

2. Installation de traitement de pâte selon la revendication 1, **caractérisée en ce que** le dispositif de commande (2) est configuré pour détecter, sur la base de valeurs de mesure d'au moins un capteur de circuit de démarrage (3) associé aux sections de traitement respectives (I - VI), un début (a) et/ou une fin (e) du format de produit (P1, P2) y entrant et, sur la base d'une vitesse de bande (v) réglée pour ce format de produit (P1, P2) au niveau des sections de traitement (I - VI), pour déterminer à quel endroit le début (a) et/ou la fin (e) du format de produit (P1, P2) se trouve à l'intérieur des sections de traitement respectives (I - VI).

3. Installation de traitement de pâte selon la revendication 2, **caractérisée en ce que** le dispositif de commande (2) est configuré pour déterminer les moments respectifs auxquels le début (a) d'un format de produit (P2) traité en premier lieu selon le deuxième programme de produit (B) atteint, le long de la direction de production (R), des sorties respectives des sections de traitement (I - VI) disposées l'une derrière l'autre, le dispositif de commande (2) étant amené à ces moments, à effectuer automatiquement le changement de programme sur la section de traitement (II - VI) qui suit la sortie respective, lorsque le traitement d'un format de produit (P1) précédant le format de produit (P2) traité en premier lieu selon le deuxième programme de produit (B) et traité en dernier lieu selon le premier programme de produit (A) est considéré comme terminé sur cette section, ou à retarder le changement de programme automatique sur cette section de traitement (II - VI) jusqu'à ce que la condition mentionnée précédemment soit remplie sur cette section.

4. Installation de traitement de pâte selon la revendication 2 ou 3, **caractérisée en ce que** le dispositif de commande (2) est configuré pour déterminer les moments respectifs auxquels la fin (e) d'un format de produit (P1) traité en dernier lieu selon le premier programme de produit (A) atteint, le long de la direction de production (R), des entrées respectives des sections de traitement (II - VI) disposées l'une derrière l'autre, le dispositif de commande (2) étant amené à ces moments, à effectuer automatiquement le changement de programme au niveau de la section de traitement (II - VI) précédant l'entrée respective lorsque le format de produit (P2) traité en premier lieu selon le deuxième programme de produit (B) est présent à la sortie d'une section de traitement (I - VI) précédant cette section de traitement (II - VI), ou à retarder le changement de programme automatique jusqu'à ce que la condition mentionnée précédemment soit remplie au niveau de cette section de traitement (I - VI) précédente.

5. Procédé pour l'exécution automatique d'un changement de programme sur une installation de traitement de pâte (1), un dispositif de commande (2) activant, sur une première section de traitement (I) de l'installation de traitement de pâte (1) qui lui est reliée et qui est logée en première position dans le sens de la production (R), un changement de programme d'un premier programme de produit (A) réglé sur celle-ci à un nouveau deuxième programme de produit (B), **caractérisé en ce que** le dispositif de commande (2) active le changement de programme sur la première section de traitement (I), **en ce que**, par l'activation du changement de programme sur la section de traitement (I) disposée en première position dans le sens de production (R), le dispositif de commande (2) est amené à effectuer automatiquement, par étapes successives, sur la section de traitement (II - VI) des sections de traitement (II - VI) suivantes dans le sens de production (R), le changement de programme à un moment auquel, à l'intérieur de cette section de traitement (II - VI), le traitement d'un format de produit (P1) précédent, traité en dernier lieu selon le premier programme de produit (A), est considéré comme terminé.

6. Procédé selon la revendication 5, **caractérisé en ce que** le dispositif de commande (2), sur la base de valeurs de mesure d'au moins un capteur de circuit de démarrage (3) associé aux sections de traitement respectives (I - VI), pour détecter un début (a, a') et/ou une fin (e, e') du format de produit (P1, P2) y entrant et, sur la base d'une vitesse de bande (v) réglée pour ce format de produit (P1, P2) dans les sections de traitement (I - VI), détermine à quel endroit le début (a, a') et/ou la fin (e, e') du format de produit (P1, P2) se trouve à l'intérieur des sections de traitement respectives (I - VI).

7. Procédé selon la revendication 5 ou 6, **caractérisé en ce que** le dispositif de commande (2) détermine les moments respectifs auxquels le début d'un format de produit (P2) traité en premier lieu selon le deuxième programme de produit (B) atteint, le long de la direction de production (R), des sorties respectives des sections de traitement (I - VI) disposées les unes derrière les autres, le dispositif de commande (2) étant amené à ces moments, à effectuer automatiquement le changement de programme au niveau de la section de traitement (II - VI) qui suit la sortie respective, lorsque le traitement d'un format de produit (P1) précédant le format de produit (P2) traité en premier lieu selon le deuxième programme de produit (B) et traité en dernier lieu selon le premier programme de produit (A) est considéré comme terminé au niveau de cette section, ou à retarder le changement de programme automatique au niveau de cette section de traitement (II - VI) jusqu'à ce que la condition mentionnée précédemment soit remplie au niveau de cette section.

8. Procédé selon la revendication 6 ou 7, **caractérisé en ce que** le dispositif de commande (2) détermine les moments respectifs auxquels la fin (e) d'un format de produit (P1) traité en dernier lieu selon le premier programme de produit (A) atteint, le long de la direction de production (R), des entrées respectives des sections de traitement (I - VI) disposées les unes derrière les autres, le dispositif de commande (2) étant amené à ces moments, à effectuer automatiquement le changement de programme au niveau de la section de traitement (II - VI) précédant l'entrée respective lorsque le début du format de produit (P2) traité en premier lieu selon le deuxième programme de produit (B) est présent à la sortie d'une section de traitement (I) précédant cette section de traitement (II - VI), ou à retarder le changement de programme automatique jusqu'à ce que la condition mentionnée précédemment soit remplie au niveau de cette section de traitement (I) précédente.
